# EUROPÄISCHE PATENTSCHRIFT

(11) **EP 2 369 400 B1**
(45) Veröffentlichungstag und Bekanntmachung des Hinweises auf die Patenterteilung: **06.08.2014**
(21) Anmeldenummer: 11001139.2
(22) Anmeldetag: 11.02.2011
(51) Int. Cl.: G02B 26/02, G09G 3/34

(54) **Anzeigevorrichtung mit Anzeigeelementen ohne Rückflusskanäle**
Display device with display elements without return flow channels
Dispositif d'affichage doté d'éléments d'affichage sans canaux de refoulement

(30) Priorität: 27.03.2010 DE 102010013151
(43) Veröffentlichungstag der Anmeldung: 28.09.2011
(73) Patentinhaber: advanced display technology AG, 9050 Appenzell (CH)
(72) Erfinder: Müller-Marc, Oliver, 9050 Appenzell (CH); Jerosch, Dieter, 65812 Bad Soden (DE); Rawert, Jürgen, Dr. Dipl.-Chem., 41464 Neuss (DE); Bitman, Andriy, Dipl.-Ing., 44309 Dortmund (DE)
(74) Vertreter: Tönhardt, Marion

(56) Entgegenhaltungen:
- EP-A1- 0 806 753
- US-A- 4 583 824
- US-A1- 2009 059 348

## Beschreibung

Die Erfindung betrifft eine Anzeigevorrichtung, mit zumindest einem elektronisch ansteuerbaren Anzeigeelement. Genauer betrifft die Erfindung eine Anzeigevorrichtung, welche sich den Elektrobenetzungseffekt zunutze macht.

Es ist bekannt, Anzeigevorrichtungen mit Hilfe farbiger Flüssigkeiten zu realisieren, wozu die Flüssigkeiten zwischen für einen Betrachter nicht einsehbaren und einsehbaren Positionen verlagert werden können. Ein effizientes Mittel für die Verlagerung der Flüssigkeiten ist das sogenannte Elektrowetting, bei dem eine sich in unmittelbarer Nachbarschaft des Flüssigkeitstropfens befindliche Elektrodenanordnung mit einer Spannung beaufschlagt wird, wodurch ein elektrisches Feld auf den Flüssigkeitstropfen einwirkt, in Folge welches sich die Oberflächenenergie und damit die Oberflächenspannung der Flüssigkeit erhöht. Dies kann je nach Anordnung dazu führen, dass sich die Flüssigkeit auf der Elektrode ausbreitet, oder diese sogar vollständig bedeckt, je nachdem, welche Geometrie und/oder Oberflächenbeschaffenheit die Elektrode aufweist und in welcher relativen Lage sich die Flüssigkeit und die Elektrode auch bezüglich des Erdgravitationsfeldes befinden. Es ist bekannt, die Elektroden mit einer hydrophoben Beschichtung zu versehen, um auf diese Weise einen maximalen Effekt zwischen dem Zustand der Flüssigkeit bei nicht beaufschlagter Elektrode und beaufschlagter Elektrode zu erzielen. Bereits mit den vorgenannten Mitteln ist es möglich, eine Tropfenbewegung zu realisieren, ohne dabei auf weitere funktionelle Elemente zurückgreifen zu müssen.

Durch eine lokale Variation der elektrischen Feldstärke kann demnach die lokale Oberflächenenergie der Flüssigkeit modifiziert und somit die Geometrie eines Tropfens lokal verändert werden. Insbesondere kann durch das Erzeugen einer lokal erhöhten Oberflächenenergie eine Bewegung des Tropfens erfolgen, indem sich dieser bevorzugt in den entsprechenden, durch das Vorhandensein eines elektrischen Feldes gekennzeichneten Bereich ausdehnt. Umgekehrt wird Flüssigkeit aus dem Bereich, in dem sie unbeeinflusst ist und somit eine geringere Oberflächenenergie aufweist, von dem beeinflussten Teil des Tropfens aufgrund der Oberflächenspannung hinterhergezogen, da sie in diesem Bereich der energieärmsten Geometrie, nämlich der einer Kugel, zustrebt. Daraus resultiert ein Nettotransport von Flüssigkeit aus dem Bereich geringer in den Bereich hoher Feldstärke.

Auf dieser Grundlage sind bereits vielfältige Anzeigen realisiert worden. Üblicherweise war es dabei stets das Ziel, ein elektronisch steuerbares bistabiles Anzeigeelement zu erzeugen, welches wahlweise den einen oder den anderen Zustand einnimmt. So ist es beispielsweise bekannt, eine Flüssigkeit zwischen einem ersten und einem zweiten Volumen, welche über einen Kanal miteinander verbunden sind, mit Hilfe des Elektrowettingeffekts hin und her zu transportieren, wozu jedes Volumen eine beigeordnete Elektrode aufweist, so dass sich die Transportrichtung jeweils aus dem Feldstärkenverhältnis zwischen beiden Elektroden ergibt. Vorzugsweise wird jeweils nur diejenige Elektrode mit einem Potential beaufschlagt, in deren Richtung die Flüssigkeit transportiert werden soll.

Aus der US 5 956 005 A ist eine Anzeigevorrichtung mit einem elektronisch ansteuerbaren Anzeigeelement bekannt, bei dem eine Elektrodenanordnung darauf ausgelegt ist, eine polare Flüssigkeit aus einem Vorhaltevolumen in ein flächiges Teilvolumen zu bewegen, wobei die polare Flüssigkeit ein Volumen einnimmt, das derart bemessen ist, dass sie unabhängig von der Spannungsbeaufschlagung der Elektrodenanordnung stets einen fluidisch dichten Verschluss zwischen dem Vorhaltevolumen und dem flächigen Teilvolumen ausbildet.

Aus der WO 2009/036272 A1 ist eine elektrowetting-basierte Anzeigevorrichtung bekannt, bei der jedem Anzeigepixel ein Elektrodenpaar, das einen Kondensator ausbildet, zugeordnet ist, mit Hilfe welches eine Flüssigkeit, die sich in dem einsehbaren Volumen des Pixels befindet, mit einem elektrischen Feld beaufschlagbar ist. Ein Rücktransport der polaren oder elektrisch leitenden Flüssigkeit in ein Reservoir, welches sich in Blickrichtung auf das Anzeigeelement unterhalb der einsehbaren Anzeigefläche befindet, wird dadurch erreicht, dass die Geometrien des einsehbaren Anzeigevolumens und die des Reservoirs derart aufeinander abgestimmt werden, dass die polare oder elektrisch leitende Flüssigkeit, wenn sie nicht von einem elektrischen Feld beaufschlagt ist, aufgrund des Young-Laplace-Druckes in das Reservoir gezogen wird.

Wollte man mit Hilfe der vorbenannten Technologie ein mehrfarbiges Display realisieren, so wäre dies nur mit Hilfe einer Vielzahl auf der Anzeigefläche nebeneinander angeordneter Pixel, welche unterschiedlich gefärbte Flüssigkeiten aufweisen, möglich. Es ist jedoch nicht möglich, die Vorrichtung gemäß der WO 2009/036272 A1 derart zu betreiben, dass ein einziges Pixel mehr als zwei Farbzustände einnehmen kann.

Darüber hinaus liegt den aus dem Stand der Technik bekannten Technologien das Prinzip zugrunde, dass für eine Zustandsänderung eines Anzeigeelements stets ein Flüssigkeitsaustausch zwischen zwei korrespondierenden Teilvolumina stattfindet, wobei die eine Flüssigkeit eine elektrisch leitende oder polare Flüssigkeit ist, welche von einem elektrischen Feld angeregt transportiert werden kann, und die andere Flüssigkeit eine unpolare Flüssigkeit ist, welche der elektrisch leitenden oder polaren Flüssigkeit in genau dasjenige Teilvolumen ausweicht, aus welchem die elektrisch leitende oder polare Flüssigkeit heraus bewegt wird. Zur Vermeidung eines hydraulischen Staus sind dazu stets Rückführkanäle vorgesehen, über die in Abhängigkeit der Bewegung der elektrisch leitenden oder polaren Flüssigkeit die unpolare Flüssigkeit zwecks Druckausgleich abfließen kann.

Die Verwendung von Rückflusskanälen hat nicht nur ästhetische Nachteile, da diese zumindest teilweise in dem einsehbaren Teilvolumen des Anzeigeelements anzuordnen sind, sondern darüber hinaus auch den Nachteil, dass sie einen gewissen Platz benötigen, was dem grundsätzlichen Ziel immer höherer Pixeldichten entgegensteht.

Die US 4,583,824 beschreibt eine Anzeigevorrichtung mit zumindest einem elektronisch ansteuerbaren Anzeigeelement, wobei das Anzeigeelement ein fluidisch abgeschlossenes Volumen aufweist, bestehend aus einem einsehbaren Teilvolumen, einem weiteren Teilvolumen und zumindest zwei fluidisch mit dem einsehbaren Teilvolumen verbundenen Vorhaltevolumina für das Vorhalten jeweils genau einer elektrisch leitenden oder polaren Flüssigkeit. Für den Druckausgleich während des Transports der polaren Flüssigkeit zwischen dem einsehbaren Teilvolumen und dem weiteren Teilvolumen sind Rückführkanäle vorgesehen. Entsprechende Anzeigevorrichtungen sind auch aus der US 2009/0059348 A1 und der EP 0806753 A1 bekannt.

Es ist somit die Aufgabe der Erfindung, die aus der WO 2009/036272 A1 bekannte Technologie derart fortzuentwickeln, dass ein einziges Anzeigeelement mehr als zwei Farbzustände einnehmen kann. Darüber hinaus sollte das vorzuschlagende Anzeigeelement in Richtung senkrecht zur Anzeigeebene möglichst flach ausgebildet sein, gleichzeitig jedoch eine möglichst hohe Apertur bieten. Schließlich ist es wünschenswert, dass das vorgeschlagene Anzeigeelement auf die Verwendung von Rückführkanälen verzichtet.

Diese Aufgabe löst eine erfindungsgemäße Anzeigevorrichtung mit den in Anspruch 1 specificierten Merkmalen.

Die vorliegende Erfindung entwickelt somit einen völlig neuen Ansatz zur Nutzbarmachung des Elektrowetting-Effektes. Es ist vorgesehen, dass zumindest zwei Vorhaltevolumina mit einem gemeinsamen einsehbaren Teilvolumen und einem weiteren gemeinsamen Teilvolumen fluidisch in Verbindung stehen, wobei die elektrisch leitenden oder polaren Flüssigkeiten im spannungslosen Zustand einer ersten Elektrodenanordnung, welche dem weiteren Teilvolumen zugeordnet ist, von den Vorhaltevolumina vorgehalten werden. Dies kann dadurch erreicht werden, dass das einsehbare und das weitere Teilvolumen jeweils eine Geometrie aufweisen, welche einen elektrisch leitenden oder polaren Flüssigkeitstropfen, der in einem der Teilvolumina vorgehalten werden soll, dazu zwingen, innerhalb dieser eine Oberfläche einzunehmen, welche betragsmäßig größer ist als diejenige Oberfläche, welche der Tropfen in dem zugeordneten Vorhaltevolumen einnehmen könnte. Daraus folgt unmittelbar ein Young-Laplace-Druckgefälle zwischen den Teilvolumina und den Vorhaltevolumina, so dass ein Tropfen im spannungslosen Zustand der ersten Elektrodenanordnung in Richtung Vorhaltevolumen strebt.

Es ist weiterhin vorgesehen, dass das Volumen einer jeden elektrisch leitenden oder polaren Flüssigkeit gerade derart bemessen ist, dass es zumindest geringfügig größer ist als dasjenige Volumen, welches die Flüssigkeit sowohl in dem Vorhaltevolumen als auch in jedem der Teilvolumina einnehmen kann. Dies bedingt unmittelbar, dass die elektrisch leitende oder polare Flüssigkeit niemals vollständig aus ihrem zugeordneten Vorhaltevolumen heraustritt sowie niemals vollständig innerhalb dieses vorliegen kann und somit stets einen Verschluss des jeweiligen Vorhaltevolumens ausbildet, welcher das Eindringen von unpolarer Flüssigkeit in das entsprechende Vorhaltevolumen verhindert.

Da die Erfindung insbesondere auch nicht die Verwendung von Rückflusskanälen vorsieht, ist es bei entsprechenden Anzeigevorrichtungen auch nicht möglich, dass ein Druckausgleich in Folge eines Transports von elektrisch leitender oder polarer Flüssigkeit alleine dadurch erreicht werden kann, dass ein entsprechendes Volumen unpolarer Flüssigkeit das freiwerdende Volumen innerhalb des Vorhaltevolumens einnimmt. Da sämtliche Vorhaltevolumina sowohl über das einsehbare Teilvolumen als auch über das weitere Teilvolumen fluidisch miteinander in Verbindung stehen, folgt aus dem Transport einer bestimmten elektrisch leitenden oder polaren Flüssigkeit stets, dass auch die übrigen elektrisch leitenden oder polaren Flüssigkeiten einem Druckgefälle ausgesetzt werden.

Wird somit beabsichtigt, eine bestimmte farbige elektrisch leitende oder polare Flüssigkeit aus ihrem zugeordneten Vorhaltevolumen in das einsehbare Teilvolumen zu transportieren, so wird dies dadurch erreicht, dass die übrigen elektrisch leitenden oder polaren Flüssigkeiten zumindest teilweise aus ihren Vorhaltevolumina in das weitere Teilvolumen transportiert werden, indem die Elektrodenanordnung derart betrieben wird, dass diejenigen elektrisch leitenden oder polaren Flüssigkeiten, die nicht in dem einsehbaren Teilvolumen dargestellt werden sollen, in das weitere Teilvolumen gezogen werden. Da erfindungsgemäß keinerlei Rückflusskanäle vorgesehen sind, entsteht beim Befördern der nicht ausgewählten elektrisch leitenden oder polaren Flüssigkeit in das weitere Teilvolumen in dem weiteren Teilvolumen ein Überdruck bzw. in dem einsehbaren Teilvolumen ein Unterdruck, in Folge welcher die ausgewählte elektrisch leitende oder polare Flüssigkeit, auf welche kein elektrisches Feld der ersten Elektrodenanordnung einwirkt, in das einsehbare Teilvolumen gezogen wird.

Es wird deutlich, dass die erfindungsgemäße Anzeigevorrichtung darüber hinaus den Vorteil aufweist, dass für den Transport der anzuzeigenden elektrisch leitenden oder polaren Flüssigkeiten in das einsehbare Teilvolumen innerhalb dieses keine Elektroden vorgesehen sein müssen. Dieser weitere wesentliche Unterschied zum Stand der Technik bietet zusätzliche Freiheiten bei der Gestaltung des einsehbaren Teilvolumens.

Ausgehend vom Stand der Technik wird der Fachmann weiterhin erkennen, dass die erfindungsgemäß vorgesehene flächige Ausbildung des einsehbaren und des weiteren Teilvolumens insbesondere derart zu verstehen ist, dass die für die Funktionalität der vorgeschlagenen Anzeigevorrichtung notwendige Young-Laplace-Druck-Beaufschlagung der elektrisch leitenden oder polaren Flüssigkeit gewährleistet ist, wenn sich diese in dem einsehbaren oder dem weiteren Teilvolumen befindet. Darüber hinaus wird der Fachmann wissen, dass er bei der Auslegung der flächigen Teilvolumina und insbesondere seiner kürzesten Dimensionen im Hinblick auf die Nutzbarmachung des Young-Laplace-Druckes auch die Dimensionierungen der Vorhaltevolumina zu berücksichtigen bzw. die flächigen Teilvolumina und die Vorhaltevolumina aufeinander abzustimmen hat.

Ein weiterer Vorteil der vorgeschlagenen Anzeigevorrichtung gegenüber den aus dem Stand der Technik bekannten besteht darin, dass es diese nunmehr ermöglicht, mit Hilfe eines einzigen Anzeigeelementes mehr als zwei Farbzustände, insbesondere mehr als einen eingefärbten und einen farblosen Zustand, darzustellen.

Bei einer bevorzugten Ausführungsform der Erfindung sind die Geometrien des einsehbaren und des weiteren Teilvolumens derart aufeinander abgestimmt, dass die elektrisch leitenden oder polaren Flüssigkeiten im spannungslosen Zustand der Elektrodenanordnung einen fluidisch dichten Verschluss zwischen dem jeweiligen Vorhaltevolumen und dem weiteren Teilvolumen ausbilden.

Dies kann derart erfolgen, dass die Geometrien des einsehbaren Teilvolumens und des weiteren Teilvolumens derart aufeinander abgestimmt sind, dass auf eine elektrisch leitende oder polare Flüssigkeit, die sich innerhalb des weiteren Teilvolumens befindet, ein geringerer Young-Laplace-Druck ausgeübt wird, als auf dieselbe Flüssigkeit, wenn sie sich innerhalb des einsehbaren Teilvolumens befindet.

Da die elektrisch leitenden oder polaren Flüssigkeiten, wie sie aus dem Stand der Technik für herkömmliche Elektrowetting-Anzeigeelemente verwendet werden, grundsätzlich untereinander mischbar sind, sieht die vorliegende Erfindung vor, dass die erste Elektrodenanordnung und/oder das weitere Teilvolumen eine geometrische Struktur aufweisen, die ein Vermischen der elektrisch leitenden oder polaren Flüssigkeiten verhindert, wenn sich mehrere dieser zumindest anteilig in dem weiteren Teilvolumen befinden. Gemäß einer Ausführungsform ist vorgesehen, dass die Struktur der Elektrodenanordnung darin besteht, dass diese eine Anzahl Elektroden entsprechend der Anzahl Vorhaltevolumina aufweist, die unabhängig voneinander mit einer elektrischen Spannung beaufschlagbar und räumlich voneinander getrennt angeordnet sind, wobei jede Elektrode genau einem Vorhaltevolumen zugeordnet ist und den Übergangsbereich zwischen diesem Vorhaltevolumen und dem weiteren Teilvolumen umgibt.

Gemäß einer weiteren Ausführungsform der Erfindung besteht die geometrische Struktur des weiteren Teilvolumens darin, dass das weitere Teilvolumen zumindest eine lokale Verengung aufweist.

Es ist zweckmäßig, das einsehbare Teilvolumen in einer ersten, einem Betrachter zugewandten Ebene, die Vorhaltevolumen in einer der ersten Ebene untergeordneten zweiten Ebene und das weitere Teilvolumen in einer der zweiten Ebene untergeordneten dritten Ebene zu bilden. Dabei erfolgt die fluidische Anbindung der Vorhaltevolumina an das einsehbare Teilvolumen vorzugsweise an der einem Betrachter abgewandten Unterseite des einsehbaren Teilvolumens. Die fluidische Anbindung der Vorhaltevolumina an das weitere Teilvolumen erfolgt vorzugsweise an der einem Betrachter zugewandten Vorderseite des weiteren Teilvolumens.

Es ist grundsätzlich möglich, die erfindungsgemäße Anzeigevorrichtung reflektiv oder alternativ auch transflektiv auszubilden, d. h. entweder ausschließlich unter Verwendung des Umgebungslichts, oder unter Verwendung einer zusätzlichen Lichtquelle. Eine Ausführungsform der erfindungsgemäße Anzeigevorrichtung, welche reflektiv ausgeführt ist, zeichnet sich dadurch aus, dass die unpolare Flüssigkeit im Wesentlichen transparent ist und somit das an einer Unterseite des einsehbaren Teilvolumens reflektierte Licht eines Reflektors annimmt, wenn sich die unpolare Flüssigkeit in dem einsehbaren Teilvolumen befindet. Grundsätzlich soll die Unterseite gerade diejenige Seite des flächigen einsehbaren Teilvolumens darstellen, an welcher die Vorhaltevolumina fluidisch mit dem einsehbaren Teilvolumen in Verbindung stehen. Es kann zweckmäßig sein, den Reflektor in Lichteinfallsrichtung hinter dem einsehbaren Teilvolumen anzuordnen.

Alternativ kann die Anzeigevorrichtung auch transflektiv, d. h. mit Hilfe selbst leuchtender Anzeigeelemente ausgeführt sein, mit einer Lichtquelle eines bestimmten Farbspektrums, welche in Blickrichtung auf die Anzeigevorrichtung unterhalb des einsehbaren Teilvolumens angeordnet ist und optisches Licht emittiert, das zumindest teilweise durch das einsehbare Teilvolumen hindurch antiparallel zu der Blickrichtung eines Betrachters propagiert. Es ist somit vorgesehen, dass die elektrisch leitenden oder polaren Flüssigkeiten wie ein Farbfilter für das Licht der Lichtquelle wirken. Für die Realisierung einer transflektiven Anzeigevorrichtung ist zu berücksichtigen, dass, wenn sich eine elektrisch leitende oder polare Flüssigkeit in dem einsehbaren Teilvolumen befindet, die übrigen elektrisch leitenden oder polaren Flüssigkeiten in dem weiteren Teilvolumen vorgehalten werden und damit für das von einer an der Rückseite des Anzeigeelements angeordneten Lichtquelle emmitierte Licht ein Hindernis darstellen, welches das von der Lichtquelle emmitierte Lichtspektrum beeinflusst oder die emmitierte Lichtintensität vermindert. Bei einer transflektiven Anzeigevorrichtung müssten somit optische Strukturen vorgesehen sein, welche dafür sorgen, dass das an der Rückseite eines Anzeigeelements emmitierte Licht um diejenigen Bereiche des weiteren Teilvolumens herum lenkt, welche von den in dem weiteren Teilvolumen vorgehaltenen elektrisch leitenden oder polaren Flüssigkeiten eingenommen werden. Alternativ wäre es auch denkbar, das Licht seitlich in die Anzeigeelemente einzuleiten, vorzugsweise im Bereich der Vorhaltevolumina, wo konstruktionsbedingt ausreichend Freiraum für die ungehinderte Lichtpropagation vorliegt. Dazu könnten aus dem Stand der Technik bekannte Lichtverteilerplatten verwendet werden, bei denen, je nach Ausführungsform, auch ein seitlicher Lichteintrag vorgesehen ist.

Bei einer anderen Ausführungsform der Erfindung kann es vorgesehen sein, dass das Anzeigeelement eine zweite mit einer elektrischen Spannung beaufschlagbare Elektrodenanordnung aufweist, die darauf ausgelegt ist, wahlweise das einsehbare Teilvolumen zumindest abschnittsweise mit einem elektrischen Feld zu durchsetzen. Diese zusätzliche Elektrodenanordnung kann insbesondere dazu verwendet werden, die Ausbreitung der hydraulisch in das einsehbare Teilvolumen beförderten elektrisch leitenden oder polaren Flüssigkeit zu verbessern.

Bei einer bevorzugten Ausführungsform der Erfindung ist vorgesehen, dass das Anzeigeelement zumindest eine Auswahlelektrode mit einer hydrophoben Oberfläche aufweist, die von einer leitenden oder polaren Flüssigkeit, welche sich innerhalb des einsehbaren Teilvolumens oder innerhalb eines Vorhaltevolumens befindet, nur dann benetzt wird, wenn sie mit einer elektrischen Spannung beaufschlagt ist, wobei die Auswahlelektrode im Übergangsbereich zwischen dem Vorhaltevolumen und dem einsehbaren Teilvolumen angeordnet ist. Diese Ausführungsform kann auch unabhängig davon vorteilhaft sein, ob die Anzeigevorrichtung eine zweite mit einer elektrischen Spannung beaufschlagbare Elektrodenanordnung für das Durchsetzen des einsehbaren Teilvolumens mit einem elektrischen Feld aufweist, oder nicht.

Weist die Anzeigevorrichtung jedoch die genannte zweite Elektrodenanordnung auf und ist diese einheitlich ausgeführt, so dass in Folge ihrer Aktivierung im Wesentlichen das gesamte einsehbare Teilvolumen mit einem elektrischen Feld durchsetzt wird, ist es notwendig, die übrigen elektrisch leitenden oder polaren Flüssigkeiten, welche nicht in das einsehbare Teilvolumen bewegt werden sollen, in einem gewissen Abstand zu der zweiten Elektrodenanordnung und insbesondere innerhalb der Vorhaltevolumina zu halten. Dazu kann es vorgesehen sein, dass zwischen einem jeden Vorhaltevolumen und dem einsehbaren Teilvolumen im

Übergangsbereich eine hydrophob beschichtete Auswahlelektrode eingebracht ist, die von der elektrisch leitenden oder polaren Flüssigkeit nur dann benetzt wird, wenn sie mit einer Spannung beaufschlagt wird. Dabei ist es zweckmäßig, dass die hydrophobe Auswahlelektrode zumindest um ein kleines Stück in das entsprechende Vorhaltevolumen hineinragt, um auf diese Weise eine darin vorgehaltene elektrisch leitende oder polare Flüssigkeit dem Einflussbereich der zweiten Elektrodenanordnung zu entziehen, sofern die entsprechende Auswahlelektrode nicht mit einer elektrischen Spannung beaufschlagt ist. Ebenso ist es zweckmäßig, dass die Auswahlelektrode um ein kleines Stück in das einsehbare Teilvolumen hineinragt, um auf diese Weise zu verhindern, dass eine elektrisch leitende oder polare Flüssigkeit, welche sich in dem einsehbaren Teilvolumen befindet, in den Übergangsbereich zu einem derjenigen Vorhaltevolumina gelangt, denen sie nicht zugeordnet ist.

Bei der Verwendung von Auswahlelektroden ist es zweckmäßig, für den Transport der ausgewählten elektrisch leitenden oder polaren Flüssigkeit in das einsehbare Teilvolumen diejenige Auswahlelektrode zu aktivieren, d. h. mit einer elektrischen Spannung zu beaufschlagen, welche sich im Übergangsbereich zwischen dem ihr zugeordneten Vorhaltevolumen und dem einsehbaren Teilvolumen befindet.

Für den Rücktransport einer sich in dem einsehbaren Teilvolumen befindenden elektrisch leitenden oder polaren Flüssigkeit in ihr zugeordnetes Vorhaltevolumen ist es zweckmäßig, zunächst die Spannungsbeaufschlagung der zweiten Elektrodenanordnung und daraufhin die Spannungsbeaufschlagung der zugeordneten Auswahlelektrode zu unterbrechen.

Zusätzlich zu der letztgenannten Maßnahme können auch Erhöhungen innerhalb des einsehbaren Teilvolumens und um den Übergangsbereich herum vorgesehen sein, welche eine Barriere sowohl für diejenige elektrisch leitende oder polare Flüssigkeit bilden, welche sich innerhalb des einsehbaren Teilvolumens befinden, als auch für diejenigen Flüssigkeiten, welche in den Vorhaltevolumina vorliegen.

Gemäß einer Ausführungsform der erfindungsgemäßen Anzeigevorrichtung unter Verwendung von Auswahlelektroden ist es vorgesehen, dass die Auswahlelektroden durch das jeweilige Vorhaltevolumen hindurch bis zur Rückseite des Anzeigeelements durchkontaktiert sind, so dass die Anzeigeelemente der Anzeigevorrichtung vollständig über ihre Rückseiten mit Hilfe standardisierter Leiterplatten kontaktierbar sind. Derartige Elektroden-Durchkontaktierungen sind dem Fachmann als Micro-Vias bekannt und werden sehr gut beherrscht. Mit Hilfe dieser Ausführungsform können bekannte TFT-Tafeln als Zugangselemente verwendet werden. Wird dabei nicht gefordert, dass die erzeugte Gesamtstruktur transparent ist, wie es beispielsweise bei vollständig reflektiv betriebenen Systemen der Fall ist, können als Zugangselemente sogar standardisierte FR4-Leiterplatten oder dergleichen verwendet werden. Da bei solchen mehrlagigen Anschlusstechniken die notwendigen Ansteuerelemente der Anzeigevorrichtung, wie Treiberchips, auf der Rückseite des Aufbaus angebracht werden können, ist ein nahezu nahtloses Aneinanderfügen einzelner Submodule zu größeren Flächen möglich.

Bei einer Ausführungsform der Erfindung ist vorgesehen, dass sie genau acht Vorhaltevolumina aufweist, die mit einem gemeinsamen einsehbaren Teilvolumen fluidisch in Verbindung stehen und von denen jedes Vorhaltevolumen eine der Farben Cyan, Magenta, Gelb, Schwarz, Rot, Grün, Blau und Weiß aufnimmt.

Weitere Einzelheiten der Erfindung ergeben sich aus der nachfolgenden Figurenbeschreibung. Dabei zeigt:
- Figur 1: eine Draufsicht auf eine Ausführungsform des erfindungsgemäßen Anzeigeelements;
- Figur 2: eine Rückansicht der Ausführungsform gemäß Figur 1; und
- Figur 3: drei Querschnittsansichten eines weiteren erfindungsgemäßen Anzeigeelements.

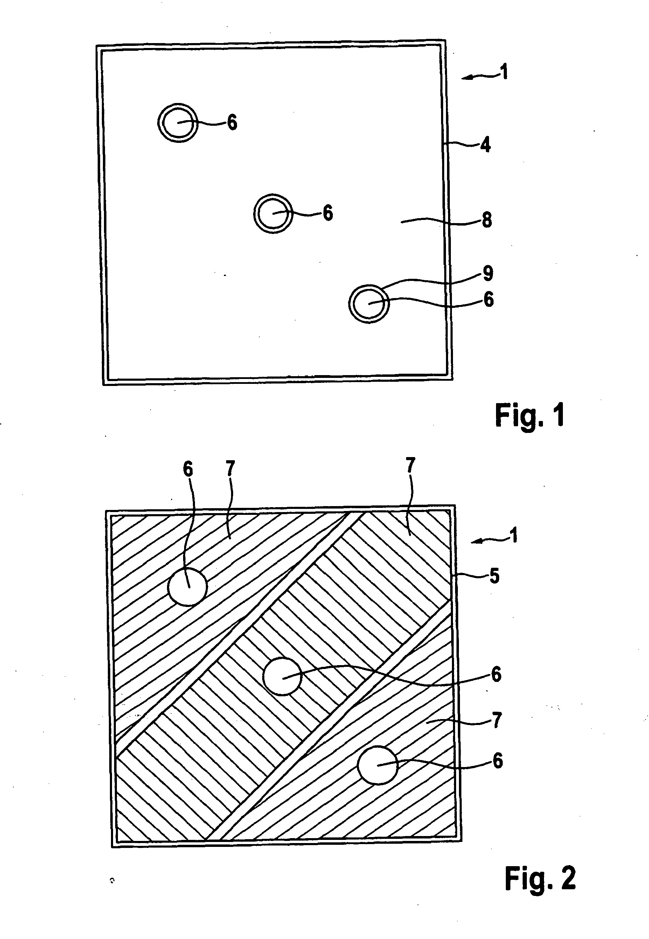

In der Figur 1 ist eine Draufsicht einer ersten Ausführungsform des erfindungsgemäßen Anzeigeelements 1 dargestellt. Neben dem einsehbaren Teilvolumen 4, welches in der Draufsicht insbesondere durch das Vorliegen einer bei dieser Ausführungsform vorgesehenen zweiten Elektrodenanordnung 8 deutlich wird, sind drei Vorhaltevolumina 6 vorgesehen, welche im Übergangsbereich zu dem einsehbaren Teilvolumen 4, bzw. zu der das einsehbare Teilvolumen einseitig begrenzenden zweiten Elektrodenanordnung 8, eine von der zweiten Elektrodenanordnung 8 elektrisch isolierte Auswahlelektrode 9 aufweisen. Die Auswahlelektrode 9 ist hydrophob beschichtet. Auf diese Weise ist es möglich, die zweite Elektrodenanordnung 8 einheitlich auszubilden, d. h. derart, dass mit ihrer Spannungsbeaufschlagung das gesamte einsehbare Teilvolumen 4 mit einem elektrischen Feld durchsetzt wird, was grundsätzlich dazu führen würde, dass jede der elektrisch leitenden oder polaren Flüssigkeiten, welche sich in ihren zugeordneten Vorhaltevolumina 6 befinden, im Einflussbereich des elektrischen Feldes lägen. Dies kann jedoch gerade mit Hilfe der Auswahlelektroden 9 unterdrückt werden, und zwar indem es nur derjenigen elektrisch leitenden oder polaren Flüssigkeit ermöglicht wird, die zugeordnete hydrophob beschichtete Auswahlelektrode 9 zu benetzen, deren zugeordnete Auswahlelektrode 9 gleichzeitig zu der zweiten Elektrodenanordnung 8 elektrisch beaufschlagt wird. Die hydrophoben Beschichtungen der übrigen Auswahlelektroden 9, welche nicht beaufschlagt sind, verhindern ein Benetzen der entsprechenden elektrisch leitenden oder polaren Flüssigkeiten und somit ein Eindringen dieser in den Übergangsbereich zu dem einsehbaren Teilvolumen 4, in welchem sie im Einflussbereich des elektrischen Feldes der zweiten Elektrodenanordnung 8 stünden.

Figur 2 zeigt eine Rückansicht des in Figur 1 dargestellten Anzeigeelements 1. Es ist zu erkennen, dass die erste Elektrodenanordnung 7 eine Struktur aufweist, welche sie insbesondere in drei elektrisch voneinander entkoppelte und damit unabhängig voneinander ansteuerbare Elektroden unterteilt. Es ist weiterhin zu erkennen, dass jede der Elektroden genau einem Vorhaltevolumen 6 zugeordnet ist und den Übergangsbereich zwischen einem Vorhaltevolumen 6 und dem weiteren Teilvolumen 5 umgibt. Auf diese Weise sind die sich im spannungslosen Zustand sämtlicher Elektroden des Anzeigeelements 1 innerhalb der Vorhaltevolumina 6 befindenden elektrisch leitenden oder polaren Flüssigkeiten unabhängig voneinander ansteuerbar, d. h. in das weitere Teilvolumen 5 bewegbar, wo sie sich ebenfalls aufgrund der Strukturierung der Elektrodenanordnung 7 nicht vermischen können, sofern sich mehrere dieser innerhalb des weiteren Teilvolumens 5 befinden.

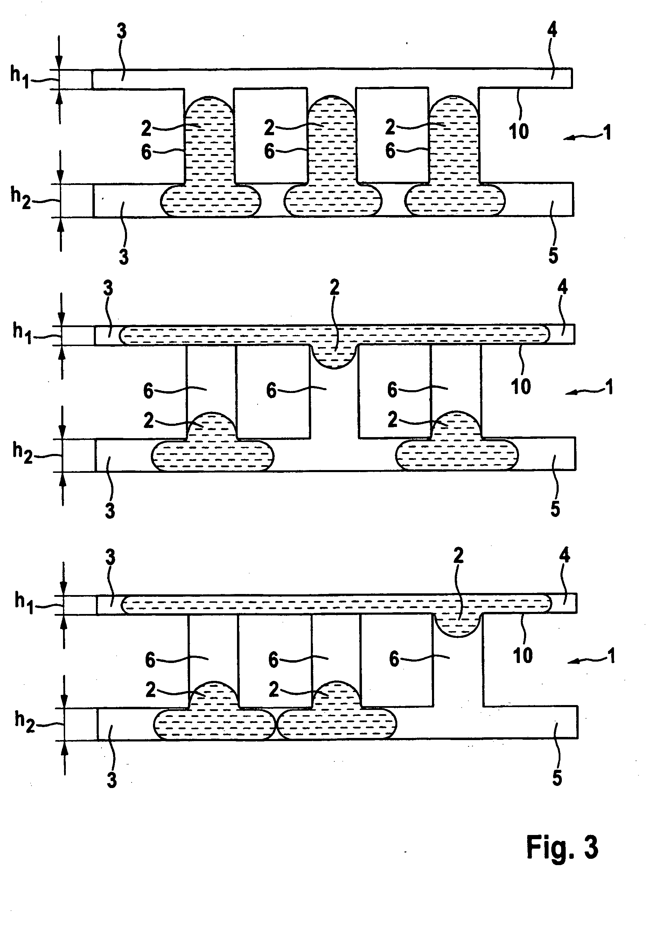

Figur 3 zeigt drei Querschnittsansichten einer Ausführungsform des erfindungsgemäßen Anzeigeelements 1. Obwohl in den Querschnittsansichten lediglich drei Vorhaltevolumina 6 dargestellt sind, ist es denkbar, dass sich ebenfalls in Richtung senkrecht zur Zeichnungsebene weitere Vorhaltevolumina 6 befinden, welche ebenfalls mit einem einsehbaren Teilvolumen 4 als auch dem weiteren Teilvolumen 5 fluidisch verbunden sind.

In der oberen Darstellung ist der Ausgangszustand eines erfindungsgemäßen Anzeigeelements 1 dargestellt, wenn die erste Elektrodenanordnung 7 und, falls vorhanden, eine zweite Elektrodenanordnung 8 nicht mit einer Spannung beaufschlagt sind. In diesem Fall befinden sich die dargestellten elektrisch leitenden oder polaren Flüssigkeiten 2 innerhalb ihrer zugeordneten Vorhaltevolumina 6. Es ist ebenfalls zu erkennen, dass das Volumen einer jeden elektrisch leitenden oder polaren Flüssigkeit 2 größer ist als das des zugeordneten Vorhaltevolumens 6, so dass auch im spannungslosen Zustand der Elektrodenanordnungen 7, 8 ein Teil einer jeden elektrisch leitenden oder polaren Flüssigkeit 2 in das weitere Teilvolumen 5 hineinragt. Dadurch, dass das weitere Teilvolumen 5 aufgrund seiner im Vergleich zu dem einsehbaren Teilvolumen 4 größeren Höhe h₂, mit h₂ > h₁, der elektrisch leitenden oder polaren Flüssigkeit 2 ermöglicht, eine Geometrie mit im Vergleich zu dem einsehbaren Teilvolumen 5 geringerer Oberfläche einzunehmen, bevorzugt es der nicht in dem zugeordneten Vorhaltevolumen 6 im spannungslosen Zustand der Elektrodenanordnungen 7, 8 aufnehmbare Flüssigkeitsanteil der elektrisch leitenden oder polaren Flüssigkeit 2, in das weitere Teilvolumen 5 und nicht in das einsehbare Teilvolumen 4 einzudringen. Dieses teilweise Eindringen des überschüssigen Flüssigkeitsanteils bewirkt die für die Erfindung wesentliche Verschlussfunktion, im dargestellten Fall zwischen dem jeweiligen Vorhaltevolumen 6 und dem weiteren Teilvolumen 5.

Die mittlere und untere Darstellung in Figur 3 zeigen jeweils einen Zustand des erfindungsgemäßen Anzeigeelements 1, bei dem eine elektrisch leitende oder polare Flüssigkeit 2 aktiviert ist, d. h. in das einsehbare Teilvolumen 4 bewegt worden ist. In der mittleren Darstellung wurde dies dadurch erreicht, dass die in der Darstellung linke und die rechte elektrisch leitende oder polare Flüssigkeit 2 in das weitere Teilvolumen 5 bewegt worden sind, indem entsprechende und in der Darstellung nicht sichtbare Elektroden der ersten Elektrodenanordnung mit einer elektrischen Spannung beaufschlagt worden sind. Bei der unteren Darstellung wurden dementsprechend die linke und mittlere Elektrode der ersten Elektrodenanordnung mit einer elektrischen Spannung beaufschlagt, um die elektrisch leitenden Flüssigkeit, die im spannungslosen Zustand in dem linken und dem mittleren Vorhaltevolumen 6 aufgenommen sind, in das weitere Teilvolumen 5 zu bewegen. In beiden Fällen hat die Bewegung der elektrisch leitenden oder polaren Flüssigkeiten in das weitere Teilvolumen 5 zu einem Druckgefälle zwischen dem einsehbaren Teilvolumen 4 und dem weiteren Teilvolumen 5 geführt, in Folge welches die nicht in das weitere Teilvolumen 5 gezogene elektrisch leitende oder polare Flüssigkeit 2 hydraulisch in das einsehbare Teilvolumen 4 befördert worden ist. Auch die mittlere und untere Darstellung, welche das erfindungsgemäße Anzeigeelement 1 in einem aktivierten Zustand zeigen, lassen erkennen, dass sowohl die Teilvolumina 4, 5 als auch das Vorhaltevolumen 6 und die Volumina der elektrisch leitenden oder polaren Flüssigkeiten derart aufeinander abgestimmt sind, dass eine jede elektrisch leitende oder polare Flüssigkeit 2, unabhängig von ihrem Zustand, d. h. ihrer Anordnung innerhalb des Anzeigeelements 1, stets einen fluidisch dichten Verschluss zwischen dem jeweiligen Vorhaltevolumen 6 und entweder dem einsehbaren oder dem weiteren Teilvolumen 4, 5 ausbildet.

Sofern das in Figur 3 dargestellte Anzeigeelement die Verwendung von Auswahlelektroden vorsieht, so ist es auch zur Ausbildung der vorgenannten Verschlussfunktion zweckmäßig, dass in der mittleren Darstellung die dem mittleren Vorhaltevolumen 6 zugeordnete Auswahlelektrode und in der unteren Darstellung die dem rechten Vorhaltevolumen 6 zugeordnete Auswahlelektrode aktiv ist, solange die entsprechende elektrisch leitende oder polare Flüssigkeit zumindest größtenteils in dem einsehbaren Teilvolumen 4 angezeigt wird.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Anzeigeelement
- 2: elektrisch leitende oder polare Flüssigkeit
- 3: unpolare Flüssigkeit
- 4: einsehbares Teilvolumen
- 5: weiteres Teilvolumen
- 6: Vorhaltevolumen
- 7: erste Elektrodenanordnung
- 8: zweite Elektrodenanordnung
- 9: Auswahlelektrode
- 10: Unterseite

## Patentansprüche

1. Anzeigevorrichtung, mit zumindest einem elektronisch ansteuerbaren Anzeigeelement (1), das aufweist:
- zumindest eine unpolare und zumindest zwei elektrisch leitende oder polare Flüssigkeiten (2, 3), wobei wenigstens die elektrisch leitenden oder polaren Flüssigkeiten (2) nicht mit der unpolaren Flüssigkeit (3) mischbar sind und wobei die elektrisch leitenden oder polaren Flüssigkeiten (2) stets räumlich getrennt voneinander vorliegen;
- ein fluidisch abgeschlossenes Volumen, mit einem einsehbaren Teilvolumen (4), einem weiteren Teilvolumen (5) und zumindest zwei fluidisch mit dem einsehbaren Teilvolumen (4) und dem weiteren Teilvolumen (5) verbundenen Vorhaltevolumina (6) für das Vorhalten jeweils genau einer der elektrisch leitenden oder polaren Flüssigkeiten (2), in denen sich jeweils zumindest ein Teil der unpolaren Flüssigkeit (3) befindet, wenn sich die dem jeweiligen Vorhaltevolumen (6) zugeordnete elektrisch leitende oder polare Flüssigkeit (2) zumindest größtenteils in dem einsehbaren Teilvolumen (4) oder dem weiteren Teilvolumen (5) befindet;
wobei das einsehbare und das weitere Teilvolumen (4, 5) flächig ausgebildet sind, mit Dimensionen, die derart ausgewählt sind, dass die elektrisch leitenden oder polaren Flüssigkeiten (2) im spannungslosen Zustand der ersten Elektrodenanordnung (7) aufgrund des Young-Laplace-Druckes in das jeweilige Vorhaltevolumen (6) gezogen werden, und
wobei eine erste Elektrodenanordnung (7) und/oder das weitere Teilvolumen (5) eine geometrische Struktur aufweisen, die ein Vermischen der elektrisch leitenden oder polaren Flüssigkeiten (2) verhindert, wenn sich mehrere dieser in dem weiteren Teilvolumen (5) befinden; und
wobei jede der elektrisch leitenden oder polaren Flüssigkeiten (2) ein Volumen einnimmt, das derart bemessen ist, dass sie unabhängig von der Spannungsbeaufschlagung der Elektrodenanordnung (7) stets einen für die unpolare Flüssigkeit (3) fluidisch dichten Verschluss zwischen dem jeweiligen Vorhaltevo umen (6) und entweder dem einsehbaren oder dem weiteren Teilvolumen (4, 5) ausbilden, **dadurch gekennzeichnet,**
**dass** zumindest eine Spannungsquelle, die an der ersten Elektrodenanordnung (7) anliegt, welche darauf ausgelegt ist, wahlweise das weitere Teilvolumen (5) zumindest abschnittsweise mit einem elektrischen Feld zu durchsetzen, derart, dass zumindest eine der elektrisch leitenden oder polaren Flüssigkeiten (2) zumindest teilweise aus ihrem Vorhaltevolumen (6) in das weitere Teilvolumen (5) bewegbar ist, wobei in dem weiteren Teilvolumen (5) ein Überdruck bzw. in dem einsehbaren Teilvolumen (4) ein Unterdruck entsteht, in dessen Folge die elektrisch leitende oder polare Flüssigkeit (2), auf welche kein elektrisches Feld der ersten Elektrodenanordnung (7) einwirkt, in das einsehbare Teilvolumen (4) gezogen wird.

2. Anzeigevorrichtung nach Anspruch 1, **dadurch gekennzeichnet, dass** die Geometrien des einsehbaren und des weiteren Teilvolumens (4, 5) derart aufeinander abgestimmt sind, dass die elektrisch leitenden oder polaren Flüssigkeiten (2) im spannungslosen Zustand der Elektrodenanordnung (7) den fluidisch dichten Verschluss zwischen dem jeweiligen Vorhaltevolumen (6) und dem weiteren Teilvolumen (5) ausbilden.

3. Anzeigevorrichtung nach Anspruch 2, **dadurch gekennzeichnet, dass** die Geometrien des einsehbaren Teilvolumens (4) und des weiteren Teilvolumens (5) derart aufeinander abgestimmt sind, dass auf eine der elektrisch leitenden oder polaren Flüssigkeiten (2), die sich innerhalb des weiteren Teilvolumens (5) befindet, ein geringerer Young-Laplace-Druck ausgeübt wird, als auf dieselbe Flüssigkeit, wenn sie sich innerhalb des einsehbaren Teilvolumens (4) befindet.

4. Anzeigevorrichtung nach Anspruch 1, **dadurch gekennzeichnet, dass** die Struktur der Elektrodenanordnung (7) darin besteht, dass diese eine Anzahl Elektroden entsprechend der Anzahl Vorhaltevolumina (6) aufweist, die unabhängig voneinander mit einer elektrischen Spannung beaufschlagbar und räumlich voneinander getrennt angeordnet sind, wobei jede Elektrode genau einem Vorhaltevolumen (6) zugeordnet ist und den Übergangsbereich zwischen diesem Vorhaltevolumen (6) und dem weiteren Teilvolumen (5) umgibt.

5. Anzeigevorrichtung nach Anspruch 1, **dadurch gekennzeichnet, dass** das Anzeigeelement (1) eine zweite mit einer elektrischen Spannung beaufschlagbare Elektrodenanordnung (8) aufweist, die darauf ausgelegt ist, wahlweise das einsehbare Teilvolumen (4) zumindest abschnittsweise mit einem elektrischen Feld zu durchsetzen.

6. Anzeigevorrichtung nach Anspruch 1 oder 5, **dadurch gekennzeichnet, dass** das Anzeigeelement (1) zumindest eine Auswahlelektrode (9) mit einer hydrophoben Oberfläche aufweist, die von einer leitenden oder polaren Flüssigkeiten (2), welche sich innerhalb des einsehbaren Teilvolumens (4) oder innerhalb eines der Vorhaltevolumina (6) befindet, nur dann benetzt wird, wenn sie mit einer elektrischen Spannung beaufschlagt ist, wobei die Auswahlelektrode (9) im Übergangsbereich zwischen einem der Vorhaltevolumina (6) und dem einsehbaren Teilvolumen (4) angeordnet ist.

7. Anzeigevorrichtung nach Anspruch 1, **dadurch gekennzeichnet, dass** die geometrische Struktur des weiteren Teilvolumens (5) darin besteht, dass das weitere Teilvolumen (5) zumindest eine lokale Verengung aufweist.

8. Anzeigevorrichtung nach Anspruch 1, **dadurch gekennzeichnet, dass** die unpolare Flüssigkeit (3) im Wesentlichen transparent ist und somit das an einer Unterseite (10) des einsehbaren Teilvolumens (4) reflektierte Licht die Farbe eines Reflektors annimmt, wenn sich die unpolare Flüssigkeit (3) in dem einsehbaren Teilvolumen (4) befindet und wobei die Unterseite (10) gerade diejenige Seite des flächigen einsehbaren Teilvolumens (4) ist, an welcher die Vorhaltevolumina (6) fluidisch mit dem einsehbaren Teilvolumen (4) in Verbindung stehen.

9. Anzeigevorrichtung nach Anspruch 6, **dadurch gekennzeichnet, dass** die Auswahlelektroden (9) durch das jeweilige Vorhaltevolumen (6) hindurch bis zur Rückseite des Anzeigeelements (1) durchkontaktiert sind, so dass die Anzeigeelemente (1) der Anzeigevorrichtung vollständig über ihre Rückseiten mit Hilfe standardisierter Leiterplatten kontaktierbar sind.

## Claims

1. A display device including at least one electronically controllable display element (1), comprising:
- at least one non-polar and at least two electrically conducting or polar liquids (2, 3) wherein at least said electrically conducting or polar liquids (2) are immiscible with the non-polar liquid (3), and wherein said electrically conducting or polar liquids (2) are always spatially separated from another;
- a fluidically closed volume comprising a visible subvolume (4), a further subvolume (5), and at least two storage volumes (6) in fluidic communication with said visible subvolume (4) and said further subvolume (5) for providing respectively only one of said electrically conducting or polar liquids (2), in which at least two storage volumes (6) respectively at least a portion of said non-polar liquid (3) is located when said electrically conducting or polar liquid (2) provided in the respective storage volume (6) is located in said visible subvolume (4) or in said further subvolume (5) at least for its most part;
wherein said visible and said further subvolumes (4, 5) are flat, with dimensions which are selected such that said electrically conducting or polar liquids (2) in a de-energized state of a first electrode array (7) are drawn into the respective storage volume (6) due to the Young-Laplace pressure, and
wherein said first electrode array (7) and/or said further subvolume (5) comprise a geometric structure preventing mixing of said electrically conducting or polar liquids (2), if plural thereof are present in the further subvolume (5); and
wherein each of said electrically conducting or polar liquids (2) assumes a volume dimensioned such that they independently of being charged with voltage by said electrode array (7) always form a fluidically tight closure for said non-polar liquid (3) between the respective storage volume (6) and either the visible or the further subvolume (4,5),
**characterized in that** at least one voltage source connected to the first electrode array (7) is adapted to selectively intersperse said further subvolume (5) at least partly with an electrical field, such that at least one of said electrically conducting or polar liquids (2) is at least partly movable from its storage volume (6) into said further subvolume (5), wherein in said further subvolume (5) an overpressure or in said visible subvolume (4) an underpressure, respectively, is created causing that said electrically conducting or polar liquid (2) which is not subjected to an electric field of said first electrode array (7) is drawn into said visible subvolume (4).

2. A display device of claim 1, **characterized in that** the geometries of said visible and said further subvolume (4, 5) are adjusted with respect to each other such that said electrically conducting or polar liquids (2) in a de-energized state of said electrode array (7) form said fluidically tight closure between the respective storage volume (6) and said further subvolume (5).

3. The display device of claim 2, **characterized in that** the geometries of said visible sub-volume (4) and said further subvolume (5) are adjusted with respect to each other such that a lower Young-Laplace pressure is applied to an electrically conducting or polar liquid (2) within said further subvolume (5) than on the same liquid when it is in said visible subvolume (4).

4. The display device of claim 1, **characterized in that** the structure of the electrode array (7) is in such a way that it comprises a number of electrodes corresponding to the number of storage volumes (5), wherein the electrodes can be supplied with electric voltage independently and are arranged spatially separated from one another, wherein each electrode is associated with exactly one storage volume (6) and surrounds the transition region between this storage volume (6) and said further subvolume (5).

5. The display device of claim 1, **characterized in that** the display element (1) comprises a second electrode array (8) which can be supplied with an electric voltage and which is adapted to selectively intersperse that visible subvolume (4) with an electric field at least in sections.

6. The display device of claim 1 or 5, **characterized in that** the display element (1) comprises at least one selection electrode (9) having a hydrophobic surface which is wetted by a conducting or polar liquid (2) which is located within said visible subvolume (4) or within one of said storage volumes (6) only upon application of an electric voltage, wherein said selection electrode (9) is arranged in the transition region between one of said storage volumes (6) and said visible subvolume.

7. The display device of claim 1, **characterized in that** the geometric structure of said further subvolume (5) is in such a way that the further subvolume (5) comprises at least one local necking.

8. The display device of claim 1, **characterized in that** the non-polar liquid (3) is substantially transparent and thus the light reflected at a bottom side (10) of said visible subvolume (4) assumes the color of the reflector when said non-polar liquid (3) is located within said visible subvolume (4), and wherein said bottom side (10) is that side of the flat visible subvolume (4) at which said storage volumes (6) are fluidically connected with said visible subvolume (4).

9. The display device of claim 6, **characterized in that** the selection electrodes (9) are plated through the respective storage volume (6) to the rear side of said display element (1), so that said display elements (1) of said display device can be contacted in their entirety on their rear sides by means of standardized printed circuit boards.

## Revendications

1. Dispositif d'affichage, comportant au moins un élément d'affichage (1) électroniquement actionnable, qui comporte :
- au moins un liquide (3) non polaire et au moins deux liquides (2) électroconducteurs ou polaires, au moins les liquides (2) électroconducteurs ou polaires n'étant pas miscibles au liquide (3) polaire et les liquides (2) électroconducteurs ou polaires étant disponibles toujours sous forme séparée physiquement l'un de l'autre ;
- un volume fermé sur le plan fluidique, avec un volume partiel (4) examinable, un volume partiel (5) supplémentaire et au moins deux volumes d'approvisionnement (6), reliés par voie fluidique au volume partiel (4) examinable et au volume partiel (5) supplémentaire et prévus respectivement pour la mise à disposition d'exactement un des liquides (2) électroconducteurs ou polaires, lesquels contiennent respectivement au moins une partie du liquide (3) non polaire lorsque le liquide (2) électroconducteur ou polaire, associé au volume d'approvisionnement (6), est contenu au moins en majeure partie dans le volume partiel (4) examinable ou le volume partiel (5) supplémentaire ;
le volume partiel (4) examinable et le volume partiel (5) supplémentaire étant réalisés sous forme plane avec des dimensions qui sont choisies de telle sorte que les liquides (2) électroconducteurs ou polaires, à l'état hors tension du premier système d'électrodes (7), sont attirés dans le volume d'approvisionnement (6) concerné sous l'effet de la pression de Laplace-Young, et
un premier système d'électrodes (7) et/ou le volume partiel (5) supplémentaire comportant une structure géométrique qui empêche que les liquides (2) électroconducteurs ou polaires se mélangent lorsque plusieurs de ces liquides sont contenus dans le volume partiel (5) supplémentaire ; et
chacun des liquides (2) électroconducteurs ou polaires occupant un volume qui est dimensionné de telle sorte que, indépendamment de la sollicitation en tension du système d'électrodes (7), ils constituent toujours une fermeture étanche sur le plan fluidique pour le liquide (3) non polaire entre le volume d'approvisionnement (6) respectif et le volume partiel (4) examinable ou le volume partiel (5) supplémentaire ;
**caractérisé en ce qu'**au moins une source de tension, qui est appliquée au premier système d'électrodes (7) qui est configuré pour s'introduire au choix au moins par zones avec un champ électrique dans le volume partiel (5) supplémentaire, de telle sorte qu'au moins un des liquides (2) électroconducteurs ou polaires peut être déplacé au moins en partie hors de son volume d'approvisionnement (6) vers le volume partiel (5) supplémentaire, une surpression se produisant dans le volume partiel (5) supplémentaire ou une dépression se produisant dans le volume partiel (4) examinable, à la suite de quoi le liquide (2) électroconducteur ou polaire, sur lequel n'agit aucun champ électrique du premier système d'électrodes (7), est attiré dans le volume partiel (4) examinable.

2. Dispositif d'affichage selon la revendication 1, **caractérisé en ce que** les géométries du volume partiel (4) examinable et du volume partiel (5) supplémentaire sont ajustées l'une à l'autre de telle sorte que les liquides (2) électroconducteurs ou polaires, à l'état hors tension du système d'électrodes (7), constituent la fermeture étanche au fluide entre le volume d'approvisionnement (6) concerné et le volume partiel (5) supplémentaire.

3. Dispositif d'affichage selon la revendication 2, **caractérisé en ce que** les géométries du volume partiel (4) examinable et du volume partiel (5) supplémentaire sont ajustées l'une à l'autre de telle sorte que la pression de Laplace-Young exercée sur l'un des liquides (2) électroconducteurs ou polaires contenus à l'intérieur du volume partiel (5) supplémentaire est inférieure à celle exercée sur le même liquide lorsqu'il est contenu à l'intérieur du volume partiel (4) examinable.

4. Dispositif d'affichage selon la revendication 1, **caractérisé en ce que** la structure du système d'électrodes (7) consiste à faire en sorte que ce dernier comporte un nombre d'électrodes correspondant au nombre de volumes d'approvisionnement (6) qui, indépendamment l'un de l'autre, peuvent recevoir une tension électrique et sont disposés en étant séparés physiquement l'un de l'autre, chaque électrode étant associée à exactement un volume d'approvisionnement (6) et entoure la zone de transition entre ce volume d'approvisionnement (6) et le volume partiel (5) supplémentaire.

5. Dispositif d'affichage selon la revendication 1, **caractérisé en ce que** l'élément d'affichage (1) comporte un deuxième système d'électrodes (8) qui peut être sollicité par une tension électrique et qui est configuré pour s'introduire au choix au moins par zones avec un champ électrique dans le volume partiel (4) examinable.

6. Dispositif d'affichage selon la revendication 1 ou 5, **caractérisé en ce que** l'élément d'affichage (1) comporte au moins une électrode de sélection (9) avec une surface hydrophobe qui est mouillée par un liquide (2) électroconducteur ou polaire, qui est contenu à l'intérieur du volume partiel (4) examinable ou à l'intérieur de l'un des volumes d'approvisionnement (6), uniquement lorsqu'elle est sollicitée par un tension électrique, ladite électrode de sélection (9) étant disposée dans la zone de transition entre l'un des volumes d'approvisionnement (6) et le volume partiel (4) examinable.

7. Dispositif d'affichage selon la revendication 1, **caractérisé en ce que** la structure géométrique du volume partiel (5) supplémentaire consiste à faire en sorte que le volume partiel (5) supplémentaire comporte au moins un rétrécissement local.

8. Dispositif d'affichage selon la revendication 1, **caractérisé en ce que** le liquide (3) non polaire est sensiblement transparent et, par conséquent, la lumière réfléchie sur une face inférieure (10) du volume partiel (4) examinable prend la couleur d'un réflecteur lorsque le liquide (3) non polaire est contenu dans le volume partiel (4) examinable, et la face inférieure (10) étant précisément la face du volume partiel (4) examinable plan, sur laquelle le volume d'approvisionnement (6) est en liaison fluidique avec le volume partiel (4) examinable.

9. Dispositif d'affichage selon la revendication 6, **caractérisé en ce que** les électrodes de sélection (9) sont métallisées à travers le volume d'approvisionnement (6) concerné jusque sur la face arrière de l'élément d'affichage (1), de telle sorte que les éléments d'affichage (1) du dispositif d'affichage sont entièrement mis en contact par l'intermédiaire de leurs faces arrières au moyen de plaquettes de circuits imprimés standardisées.
